# EUROPEAN PATENT SPECIFICATION

(11) **EP 2 104 415 B1**
(45) Date of publication and mention of the grant of the patent: **09.03.2011**
(21) Application number: 08701063.3
(22) Date of filing: 10.01.2008
(51) Int. Cl.: A01K 1/015

(54) **ANIMAL LITTER AND PROCESS FOR PREPARING THE SAME**
TIERSTREU UND HERSTELLUNGSVERFAHREN DAFÜR
LITIÈRE POUR ANIMAUX ET SON PROCÉDÉ DE PRÉPARATION

(30) Priority: 19.01.2007 DE 102007002973
(43) Date of publication of application: 30.09.2009
(73) Proprietor: Mars Incorporated, McLean, VA 22101-3883 (US)
(72) Inventor: LANGE, Dietmar, 56179 Vallendar (DE); WENZEL, Gunnar, 27283 Verden (DE)
(74) Representative: Winkler, Andreas Fritz Ernst
(86) International application number: PCT/EP2008/000141
(87) International publication number: WO 2008/098644

(56) References cited:
- DE-A1- 19 509 747
- US-A1- 2003 197 305

## Description

The present invention relates to an animal litter comprising a carrier material of calcium silicate, which is coated with sodium-containing bentonite, and to a process for preparing it.

Animal litter and processes for preparing it have long been known in the art. DE 28 32 194 A1, for example, describes a process for preparing calcium silicate granules or powders with a micropore structure by reacting silicon dioxide with calcium oxide, while homogenising the components in water and moulding, curing in an autoclave, comminuting and drying. The calcium silicate granules or powder can be used as animal litter. It is likewise known to use an animal litter comprising calcium silicate carrier material which has been coated with bentonite in order to improve the swelling and agglomeration properties of the animal litter, see DE 102004008019 A1; DE 19509747 A1.

US 2003/0197305 A1 discloses a method of forming an absorbent material from clay fines, comprising: treating the clay fines with an additive; wetting the clay fines so as to have moisture content of the clay fines of about 22% to 50% of the weight of the clay fines plus the weight of the additive; and extruding the treated and wetted clay fines so as to produce the absorbent material. The additive might be a sodium salt resulting in the substitution of calcium-interlayer-cations by sodium-interlayer-cations.

The term "bentonite" is used to describe clay-containing rock that has formed as a result of the weathering of volcanic ash. Its properties are determined by the clay mineral montmorillonite, which is an aluminium hydrosilicate belonging to the group of smectites (three-layered silicates). The swelling process in bentonite is caused by the fact that water penetrates between the elementary layers and can alter their spacing. Between these layers there is not only the crystal water, but also exchangeable cations, which compensate for the negative excess charges of the lattice.

Natural sodium bentonite is known, for example, in which the smectite group is mainly occupied by sodium ions in the interlayers. This natural sodium bentonite exhibits a high swelling capacity and a very good agglomeration tendency, but it is rarely found in nature.

Another known material is calcium bentonite, in which the smectite group is almost exclusively occupied with calcium or magnesium ions in the interlayers. This calcium bentonite exhibits a low swelling capacity and a very poor agglomeration tendency, but is readily available. Since natural sodium bentonite has better properties, but is less readily available than calcium bentonite, a means of activating the calcium bentonite has been developed in order to produce what is known as active bentonite. In this activation process, original calcium bentonite is mixed with sodium carbonate, for example, so that the original cation occupation of the interlayers is exchanged by means of alkaline activation by sodium ions. The

active bentonite produced in this way possesses the good properties of natural sodium bentonite and is available in large quantities.

Because of the preferred properties, natural sodium bentonite or active bentonite is used as a coating for calcium silicate carrier material in the preparation of animal litter. An animal litter of this kind is prepared by moistening the calcium silicate and mixing it with solid bentonite in powdered form, so that the bentonite can be deposited on the surface of the carrier material. It has, however, been found that the moisture needed for the coating process mobilises free calcium ions from the calcium silicate. Because of the moisture gradient, these calcium ions are conducted through the bentonite coating and exchange the sodium ions in the interlayers. The result of this exchange is a deactivated bentonite with a reduced agglomeration tendency, which is disadvantageous for the purposes of the animal litter.

It is an object of the present invention to provide an animal litter which avoids or at least limits the disadvantages of the state of the art, especially deactivation of the bentonite coating. It is a further object to provide a process for preparing an animal litter of this kind.

The first object is achieved by an animal litter having the characterizing features of claim 1. The complexing agent or component can also be partially mixed into the calcium silicate.

Components which form poorly soluble salts with calcium ions are widely known in the field of the art, e.g. sodium sulphate, sodium phosphate and potassium phosphate, the anion thereof forming a poorly soluble salt with calcium cations. With the term "poorly soluble" is meant a salt having similar or identical solubility characteristics such as calcium sulphate or calcium phosphate under typical use conditions in water.

In this context, it is preferable that the calcium silicate is present in the form of granules or powder.

It is also proposed that the bentonite is natural sodium bentonite or active bentonite.

It is particularly preferable that the complexing agent or component should be selected from the group consisting of ethylene diamine tetra-acetic acid, sodium sulphate, sodium phosphates and potassium phosphates.

It is even more preferred that the complexing agent or component should be selected from the group consisting of sodium pyrophosphate, monopotassium phosphate and pentasodium triphosphate, preferably monopotassium phosphate and pentasodium triphosphate.

It is a feature of the inventive animal bitter that the complexing agent and/or component is provided between the carrier material and the bentonite coating as a barrier layer and/or is mixed into the carrier material. A barrier layer of this kind can be prepared, for example, by a succession of consecutive process steps, such as by first preparing calcium silicate, then adding a complexing agent or component solution and finally by adding bentonite.

The second object is achieved by a process for preparing animal litter according to claim 6.

The complexing agent and/or component is preferably added in the process (for reasons of process engineering) in solution, preferably in an amount of from 0.1 to 5.0 % by weight based on the amount of dry silicate, preferably 0.5 to 1.0 % by weight. Drying is necessary in the process of the invention, because the whole formulation contains about 30 % moisture, while the finished product should preferably have 9 to 11 % moisture.

It has surprisingly been found that the deactivation of the coating of the bentonite can be avoided or limited to a considerable extent if a complexing agent for complexing free calcium ions or a component forming poorly soluble salts with calcium ions is provided within the animal litter. The complexing agent or component ensures that free calcium ions are converted into stable compounds by complexing or precipitation and can no longer reach the interlayers of the bentonite to exchange the sodium ions. It has proven particularly preferable here for the complexing agent or component to be provided in the form of a barrier layer between the calcium silicate carrier material and the bentonite coating. Preferred complexing agents/components are monopotassium phosphate and pentasodium triphosphate.

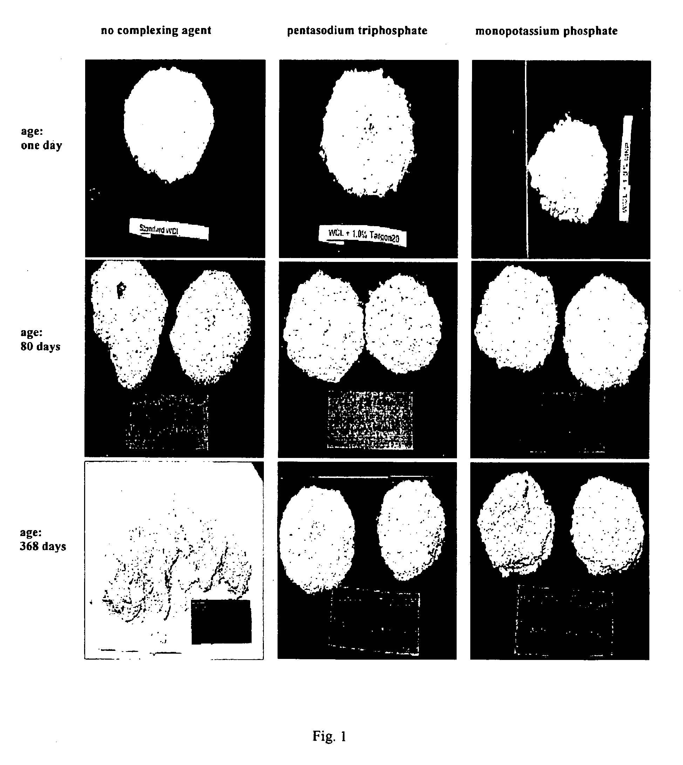

Other features and advantages of the animal litter of the invention and of the process of the invention will become clear from the following detailed description of preferred embodiments, with reference to examples and the enclosed drawing, in which Figure 1 shows photographs of the development over time of the agglomeration of animal litter produced in accordance with the invention and a comparative example.

### Example 1

In this example, the cation exchange capacity of fresh active bentonite (age about 3 days) compared to old active bentonite (age about 4 months) was measured, which was used as a coating in an animal litter based on calcium silicate in accordance with the state of the art. The fresh active bentonite was not in contact with calcium silicate. The measurement of the cation exchange capacity (CAC) in soils and landfill clays was carried out in accordance with the Mehlich method according to DIN ISO 13536. The cation contents can be quantified by means of ICP in accordance with DIN EN ISO 11885.

The results of the cation exchange capacity are shown in Table 1. The figures for the metal ions are given in millimole (equivalent) per 100 g dry matter (mmol(eq)/100 g).

**Table 1**

| **Sample** | **Na⁺** | **K⁺** | **Ca²⁺** | **Mg²⁺** |
|---|---|---|---|---|
| Fresh | 67.94 | 1.76 | 12.58 | 11.13 |
| Old | 30.46 | 0.78 | 30.24 | 0.14 |

It is unambiguously clear from the results that, in the aged product a substantial exchange of sodium for calcium ions has taken place.

In a further study, it was found that free calcium ions can be washed out of manufactured calcium silicate. When, for example, 100 g calcium silicate are eluted in one litre of de-ionised water, the eluate obtained shows, after an elution time of 24 h, that 0.2 % of the calcium ions have been eluted from the calcium silicate. If this eluate is mixed with active bentonite (25 g bentonite to 500 ml eluate), it becomes apparent that the calcium ion content in the eluate drops sharply as soon as the bentonite has been added.

### Example 2

Eluates from calcium silicate were prepared as described in Example 1, then complexing agents/components were added to these eluates in order to complex or precipitate calcium ions, with a view to checking which complexing agents/components are particularly suitable. The complexing agents/components were added in an amount of 1 % by weight based on the eluted calcium silicate hydrate, and the results regarding the calcium content in the eluates treated are summed up in the following Table 2.

**Table 2**

| **Complexing agent** | **Calcium content [1/100 %]** |
|---|---|
| Calcium silicate hydrate | 20.3 |
| Polycarboxylate (aqueous solution) | 16.6 |
| Na₅₂P₅₀O₁₅₁ | 9.45 |
| Sodium pyrophosphate | 5.35 |
| Monopotassium phosphate | 1.65 |
| NasP₃O₁₀ | 1.37 |

As can be seen from Table 2, monopotassium phosphate and pentasodium triphosphate are particularly well suited as complexing agents/components for the animal litter according to the present invention.

### Example 3

Bentonite was again added to the eluates prepared in Example 2 (25 g to 500 ml eluate). After a reaction time of 24 h, the bentonite was filtered off, dried and examined to determine its interlayer occupation. The ratio of sodium to calcium ions is shown in Table 3.

**Table 3**

| **Sample** | **Ratio Na⁺:Ca²⁺** |
|---|---|
| Original bentonite | 1:0.12 |
| Original bentonite + eluate calcium silicate hydrate | 1:0.24 |
| Original bentonite + eluate calcium silicate hydrate + pentasodium triphosphate | 1:0.008 |
| Original bentonite + eluate calcium silicate hydrate + monopotassium phosphate | 1:0.004 |

### Example 4

In order to investigate the effects of the ion re-exchange, samples without a complexing agent, with 1 % pentasodium triphosphate and with 1 % monopotassium phosphate were prepared and subjected to accelerated aging at 60° C (aging factor 16). After that, 50 ml water was added to the samples selectively in order to prepare agglomerations. Figure 1 shows, by way of example, the images of the agglomerations of all three samples in a fresh condition and at the age of 2.5 months (80 days) and one year. As can be seen, even after a period of 2.5 months, the untreated bentonite is noticeably softer than the treated material; after one year, the re-exchange has already progressed so far that agglomeration can no longer occur.

The features of the invention disclosed in the above description and in the claims can be essential to implementing the invention in its various embodiments both individually and in any combination.

## Claims

1. Animal litter comprising a carrier material of calcium silicate, which is coated with sodium-containing bentonite **characterised in that** the animal litter comprises a complexing agent for complexing free calcium ions and/or a component forming salts with calcium ions, wherein the salt has similar or identical solubility characteristics such as calcium sulphate or calcium phosphate under typical use conditions in water, wherein the complexing agent and/or component is provided between the carrier material and the bentonite coating as a barrier layer for calcium ions and/or is mixed into the carrier material.

2. The animal litter as claimed in claim 1, **characterised in that** the calcium silicate is present in the form of granules or powder.

3. The animal litter as claimed in either of claims 1 or 2, **characterised in that** the bentonite is natural sodium bentonite or active bentonite.

4. The animal litter as claimed in any of the preceding claims, **characterised in that** the complexing agent or component is selected from the group consisting of ethylene diamine tetra-acetic acid, sodium sulphate, sodium phosphates and potassium phosphates.

5. The animal litter as claimed in claim 4, **characterised in that** the complexing agent or component is selected from the group consisting of sodium pyrophosphate, monopotassium phosphate and pentasodium triphosphate, preferably monopotassium phosphate and pentasodium triphosphate.

6. A process for preparing animal litter, comprising the steps of:
- mixing moistened calcium silicate with sodium-containing bentonite,
- adding a complexing agent to complex calcium ions and/or a component for forming a salt with calcium ions before and/or during mixing, wherein the salt has similar or identical solubility characteristics such as calcium sulphate or calcium phosphate under typical use conditions in water,
- drying the mixture obtained,

7. The process as claimed in claim 6, **characterised in that** the complexing agent and/or component is added in an amount of from 0.1-5.0 % by weight, preferably 0.5-1 % by weight, based on the amount of calcium silicate.

## Patentansprüche

1. Tierstreu umfassend ein Trägermaterial aus Calciumsilicat, das mit Natrium enthaltendem Bentonit überzogen ist, **dadurch gekennzeichnet, dass** die Tierstreu einen Komplexbildner zum Komplexieren freier Calciumionen und/oder eine Komponente, die mit Calciumionen Salze bildet, umfasst, wobei das Salz ähnliche oder identische Löslichkeitseigenschaften wie Calciumsulfat oder Calciumphosphat unter typischen Verwendungsbedingungen in Wasser aufweist, wobei der Komplexbildner und/oder die Komponente zwischen dem Trägermaterial und der Bentonitbeschichtung als eine Barriereschicht für Calciumionen bereitgestellt ist und/oder in das Trägermaterial eingemischt ist.

2. Tierstreu nach Anspruch 1, **dadurch gekennzeichnet, dass** das Calciumsilicat in der Form von Granulat oder Pulver vorliegt.

3. Tierstreu nach Anspruch 1 oder 2, **dadurch gekennzeichnet, dass** der Bentonit natürlicher Natriumbentonit oder Aktivbentonit ist.

4. Tierstreu nach einem der vorangehenden Ansprüche, **dadurch gekennzeichnet, dass** der Komplexbildner oder die Komponente ausgewählt ist aus der Gruppe bestehend aus Ethylendiamintetraessigsäure, Natriumsulfat, Natriumphosphaten und Kaliumphosphaten.

5. Tierstreu nach Anspruch 4, **dadurch gekennzeichnet, dass** der Komplexbildner oder die Komponente ausgewählt ist aus der Gruppe bestehend aus Natriumpyrophosphat, Monokaliumphosphat und Pentanatriumtriphosphat, bevorzugt Monokaliumphosphat und Pentanatriumtriphosphat.

6. Verfahren zum Herstellen von Tierstreu, welches die Schritte umfasst:
- Vermischen von angefeuchtetem Calciumsilicat mit Natrium enthaltendem Bentonit,
- Zugabe eines Komplexbildners, um Calciumionen zu komplexieren, und/oder einer Komponente zum Bilden eines Salzes mit Calciumionen vor und/oder während dem Vermischen, wobei das Salz ähnliche oder identische Löslichkeitseigenschaften wie Calciumsulfat oder Calciumphosphat unter typischen Verwendungsbedingungen in Wasser aufweist,
- Trocknen der erhaltenden Mischung.

7. Verfahren nach Anspruch 6, **dadurch gekennzeichnet, dass** der Komplexbildner und/oder die Komponente in einer Menge von 0,1-5,0 Gew.-%, bevorzugt 0,5-1 Gew.-%, basierend auf der Menge des Calciumsilicats, zugegeben wird (werden).

## Revendications

1. Litière pour animaux comprenant un matériau support à base de silicate de calcium. qui est revêtu de bentonite contenant du sodium, **caractérisée en ce que** la litière pour animaux comprend un agent complexant pour complexer les ions de calcium libres et/ou un composant formant des sels avec les ions calcium, dans laquelle le sel présente des caractéristiques de solubilité similaires ou identiques à celles du sulfate de calcium ou du phosphate de calcium dans des conditions d'emploi typiques dans l'eau, litière dans laquelle l'agent complexant et/ou ledit composant sont disposés entre le matériau support et le revêtement de bentonite pour former une couche barrière pour les ions calcium et/ou est mélangé dans le matériau support.

2. La litière pour animaux telle que revendiquée dans la revendication 1, **caractérisée en ce que** le silicate de calcium est présent sous forme de granules ou de poudre.

3. La litière pour animaux telle que revendiquée dans l'une quelconque des revendications 1 ou 2, **caractérisée en ce que** la bentonite est de la bentonite de sodium naturelle ou une bentonite active.

4. La litière pour animaux telle que revendiquée dans l'une quelconque des revendications précédentes, **caractérisée en ce que** l'agent complexant ou ledit composant est choisi dans le groupe comprenant l'acide éthylène diamine tétra-acétique, le sulfate de sodium, les phosphates de sodium et les phosphates de potassium.

5. La litière pour animaux telle que revendiquée dans la revendication 4, **caractérisée en ce que** l'agent complexant ou le composant est choisi dans le groupe comprenant les pyrophosphate de sodium, phosphate monopotassique et triphosphate de pentasodium, de préférence le phosphate monopotassique et le triphosphate de pentasodium.

6. Un procédé de préparation d'une litière pour animaux, comprenant les étapes:
- de mélange de silicate de calcium humidifié avec de la bentonite contenant du sodium,
- d'addition d'un agent complexant pour complexer les ions calcium et/ou le composant pour former un sel avec les ions calcium avant et/ou après mélange, où le sel présente des caractéristiques de solubilité similaires ou identiques à celles du sulfate de calcium ou du phosphate de calcium dans des conditions d'emploi typiques dans l'eau,
- de séchage du mélange obtenu.

7. Le procédé tel que revendiqué dans la revendication 6, **caractérisé en ce que** l'agent complexant et/ou ledit composant est ajouté en une quantité allant de 0,1 à 5,0% en poids, de préférence de 0,5 à 1% en poids, exprimée par rapport à la quantité de silicate de calcium.
